# DEMANDE DE BREVET EUROPEEN

(11) **EP 2 015 578 A1**
(43) Date de publication de la demande: **14.01.2009**
(21) Numéro de dépôt: 08290569.6
(22) Date de dépôt: 17.06.2008
(51) Int. Cl.: H04N 7/173

(54) **Procédé de diffusion de télévision interactive et moyens pour la mise en oeuvre de ce procédé**

(30) Priorité: 20.06.2007 FR 0704410
(71) Demandeur: Alcatel Lucent, 75008 Paris (FR)
(72) Inventeur: Vanbelle, Alexandre, 75008 Paris (FR); Marilly, Emmanuel, 75008 Paris (FR); Boidart, Bertrand, 75008 Paris (FR); Martinot, Olivier, 75008 Paris (FR)
(74) Mandataire: Demulsant, Xavier

(57) **Abrégé**

Procédé de diffusion de télévision interactive, ce procédé comprenant d'une part la diffusion d'un programme numérique par ondes ou par câble, la réception de ce média étant assurée par un décodeur, ce procédé comprenant d'autre part la connexion à au moins un réseau informatique, notamment Internet, d'une plateforme logicielle contenant au moins une application interactive adaptée audit média numérique, le procédé comprenant une étape de connexion du décodeur avec le réseau informatique, caractérisé en ce qu'il comprend une étape d'identification, par le décodeur, d'au moins une application interactive associée au programme numérique diffusé, ce procédé comprenant en outre une étape de synchronisation de cette application interactive audit programme numérique et une étape de diffusion, par le décodeur, d'un signal comprenant le programme numérique et les données propres à l'application interactive.

## Description

L'invention a trait au domaine technique de la télévision interactive.

La télévision est un objet technique récent : premier programme régulier de télévision diffusé en 1935 en Allemagne, télévision couleur lancée en 1954 aux Etats-Unis, télévision numérique terrestre lancée en France en 1993.

Très rapidement est apparu le besoin de diffuser, en même temps que l'image et le son, du texte (télétexte) permettant ainsi le sous-titrage, ou la présentation d'informations telles que grilles de programmes. Le télétexte peut remplacer l'image ou se superposer à elle.

Le terme « interactif » est difficile à définir, parce qu'il s'applique à de nombreux produits en rapide évolution.

Pour les échanges interhumains, le terme « interactif » est employé lorsque les intervenants s'influencent mutuellement par leur dialogue. Pour les échanges homme/machine, le terme « interactif » est employé pour les conditions d'exploitations qui permettent des actions réciproques en mode dialogué ou en temps réel. Par exemple, une machine reçoit des informations d'un utilisateur et lui répond. Pour l'e-formation (*e*-*learning*), le formé intervient au cours de son processus d'apprentissage et entraîne, par cette intervention, une modification de cet apprentissage.

Par « télévision interactive » (ITV *Interactive Television*) on désigne habituellement toute technologie permettant une communication à double sens entre spectateurs et fournisseur de services (tel que *broadcaster,* câblodistributeur), notamment pour le divertissement, l'information, l'éducation, le commerce.

La demanderesse a développé une technologie de télévision interactive appelée AmigoTV permettant à l'utilisateur de partager au sein d'une communauté des opinions et des émotions. Lorsque plusieurs amis regardent le même programme de télévision, ils peuvent, grâce à AmigoTV, le commenter en direct entre eux, leurs voix passant par Internet, six personnes pouvant communiquer en même temps. Pour savoir qui est branché sur son téléviseur et la chaîne qu'il regarde, il suffit de consulter à l'aide de sa télécommande un menu ou toutes ces informations s'affichent en temps réel, la présence des membres de la communauté étant indiquée par avatars en surimpression. AmigoTV permet également d'envoyer des images et des sons choisis au sein d'un catalogue, pour illustrer son humeur en réaction à un évènement télévisé. AmigoTV ne nécessite pas d'employer un clavier ou une souris. La technologie AmigoTV nécessite toutefois casque, microphone, téléviseur et décodeur.

Les possibilités d'intervention de l'utilisateur sur le contenu et/ou la forme du programme de télévision interactive peuvent être classées en quatre degrés : zapping, réaction au contenu, action sur le contenu, échanges avec le fournisseur de services.

L'expression « télévision interactive » (*interactive television*) est donc employée pour désigner des réalités assez différentes.

Ainsi, l'expression « télévision interactive » a pu être employée pour désigner le fait qu'un téléspectateur peut choisir entre différents contenus d'un bouquet numérique, à l'aide d'un guide électronique des programmes (*EPG Electronic Program Guide*). L'offre de programmes de télévisions est internationale (satellite, IPTV), nationale (VHF UHF, câble) et de plus en plus locale (télévisions régionales et locales hertziennes). A titre indicatif, selon la FCC (*Federal Communications Commission*) il existait aux Etats-Unis, en décembre 2006, plus de 2200 chaînes de télévision UHF VHF et plus de 5000 télévisions locales sur le câble. Les EPG aident le choix parmi cette offre pléthorique de programmes.

L'expression « télévision interactive » a également été utilisée pour désigner l'accès à Internet à partir d'un décodeur ad hoc (*WebTv*).

La télévision interactive comprend conventionnellement un canal retour (*back channel*) permettant au spectateur d'adresser au fournisseur de contenu (*content provider*) des informations ou des requêtes. Le contenu télévisé traditionnel se trouve ainsi complété : accès à des liens vers des sites Internet, télécommerce (*T-commerce*), télévision à la demande (*Video On Demand*), guide électronique des programmes (*Electronic Program Guide*).

Le canal retour peut être apparent à l'écran du téléviseur (par exemple par un écran séparé *split screen*), l'utilisateur communiquant à l'aide de sa télécommande et de son décodeur (*set top box*) ou d'un dispositif incorporé (*built in*) par exemple IST (*Integrated Smart Television*).

La réalité des services proposés sous l'étiquette « télévision interactive » peut être présentée suivant deux angles : le contenu des services d'une part et le type d'interactivité d'autre part.

Pour ce qui est du contenu des services, peuvent être distinguées :
- la télévision enrichie (*enhanced TV*);
- la télévision participative (*call TV*) ;
- la télévision interactive autonome.

Pour la télévision enrichie, des services sont proposés en complément au programme télédiffusé. Des informations additionnelles sont envoyées au spectateur par exemple via l'intervalle de suppression de trame du signal télé (*Vertical Blanking Interval*) et/ou via des lignes téléphoniques. Ces informations additionnelles peuvent être du texte, des graphiques et des images fixes concernant la programmation, du contenu web activé par des déclencheurs, un nouveau volet audio et vidéo, ou bien encore une vision personnalisée (angle de caméra). A titre d'exemple, la chaîne Equidia propose aux abonnés disposant d'un terminal numérique connecté à une ligne téléphonique d'ouvrir un compte et de parier à domicile sur toutes les courses de chevaux diffusées. L'information délivrée peut être liée ou non au programme en cours de diffusion. La télévision enrichie ne permet pas une communication entre les personnes regardant un même programme.

Pour la télévision participative, un service de communication permet à un téléspectateur d'intervenir sur le contenu d'un programme diffusé pendant ou en dehors des temps d'antenne. Par exemple, la société Tatamia Solutions propose une plateforme *Tatamia Interactive Channel* permettant la diffusion de SMS (*Short Message Service*) en direct sur les écrans. Le téléspectateur peut par exemple choisir le clip vidéo qui sera diffusé pendant une émission et le dédicacer en clavardant (*chat*) avec ses amis. Les spectateurs peuvent également voter ou participer à un concours, par exemple lors d'émissions dites de télé réalité.

Un service de télévision interactive autonome ne comporte aucun service de télévision à titre principal ou accessoire. Il s'agit notamment de services transactionnels tels que banque à domicile, petites annonces. Le récepteur de télévision peut aussi par exemple être utilisé comme terminal de réception de messages entre abonnés (par exemple *TV mail* de la société TPS) : lorsqu'un abonné reçoit un nouveau message, il est automatiquement prévenu en bas de l'écran, lorsqu'il change de chaîne. Le récepteur de télévision peut également servir d'écran pour jeux interactifs proposés par une chaîne virtuelle.

Pour ce qui est du type d'interactivité, on distingue l'interactivité simulée, l'interactivité déportée et l'interactivité réelle.

Lorsque l'interactivité est simulée, les applications et données sont intégrées dans le flux vidéo diffusé, en une seule fois ou en boucle. Les services sont mis à disposition soit en temps réel sur sélection du téléspectateur, soit par stockage sur le disque dur qui permet une interactivité locale.

Lorsque l'interactivité est déportée, il y a échange de données entre le diffuseur et le téléspectateur au moyen d'un équipement indépendant du réseau de diffusion des contenus. A titre d'exemple, un parieur peut avoir accès à son compte par l'intermédiaire de la ligne téléphonique à laquelle est raccordé le décodeur.

L'interactivité est dite réelle lorsque le réseau de diffusion de services intègre une voie de retour permanente.

L'invention concerne plus particulièrement la télévision interactive à interactivité déportée.

Pour la télévision interactive, plusieurs standards sont disponibles : MPEG-4 BIFS (*Moving Pictures* and associated *audio information coding Expert Group 4 Binary Format for Scene,* encodeurs MPEG-4 H263/H264), MPEG-LASeR (*Lightweight Application Scene Representation,* mis en avant par Streamezzo), SVG (*Scalable Vector Graphics,* mis en avant par le W3C *World Wide Web Consortium*), MORE (*Mobile Open Rich-Media Environment,* mis en avant par la société Nokia).

Certains de ces standards sont réservés aux terminaux mobiles (par exemple MPEG-LASeR), d'autres peuvent être employés pour des terminaux fixes ou mobiles (par exemple MPEG-4 BIFS).

Des outils de création (*authoring tools*) permettent l'ajout d'une interactivité dans un service multimédia.

Ces outils de création présentent de nombreux inconvénients.

En premier lieu, ils ne permettent qu'un faible degré d'interactivité.

Par ailleurs, ces outils de création doivent prendre en compte les environnements spécifiques et les contextes de développement et de mise en place dans les réseaux (*deployement*). Par exemple, l'outil de création de la société Streamezzo est dédié au format multimédia MPEG4 LASeR, la société Envivo proposant quant à elle un outil de création supportant uniquement le format MPEG-4 BIFS.

Les services interactifs proposés pour la télévision sont souvent coûteux, ce qui freine leur expansion. C'est en particulier le cas pour les services qui nécessitent l'emploi de SMS (*Short Message Service*).

L'invention vise à fournir des moyens permettant un degré d'interactivité élevée pour une télévision à domicile, l'interactivité étant déportée.

L'invention vise également à permettre la création et/ou le support de services interactifs gratuits ou non.

A ces fins, l'invention se rapporte, selon un premier aspect, à un procédé de diffusion de télévision interactive, ce procédé comprenant d'une part la diffusion d'un programme numérique par ondes ou par câble, la réception de ce média étant assurée par un décodeur, ce procédé comprenant d'autre part la connexion à au moins un réseau informatique, notamment Internet, d'une plateforme logicielle contenant au moins une application interactive adaptée audit média numérique, le procédé comprenant une étape de connexion du décodeur avec le réseau informatique, ce procédé comprenant une étape d'identification, par le décodeur, d'au moins une application interactive adaptée au programme numérique diffusé, ce procédé comprenant en outre une double synchronisation :
- une première synchronisation entre le programme numérique et l'application interactive ;
- une deuxième synchronisation entre les données provenant d'au moins un terminal de communication mobile et le programme numérique.

Par « application interactive adaptée au programme numérique diffusé » on désigne ici toute application conçue spécifiquement pour le programme diffusé ou toute application pour laquelle le programme diffusé a été spécifiquement conçu et plus généralement toute application compatible avec le programme diffusé. Par « application compatible », on désigne ici notamment l'existence d'une validation du bon fonctionnement de l'application avec le programme, préalablement à la diffusion du programme.

Le procédé présente, selon diverses réalisations, les caractères suivants, le cas échéant combinés :
- ajout, dans le signal numérique diffusé, de balises servant de repère temporel pour la synchronisation du programme diffusé à l'application interactive, ces balises étant notamment des marqueurs XML, par exemple ;
- interrogation, par le décodeur, d'une base de données, une requête étant adressée à cette base de données afin d'obtenir les adresses des applications interactives associées au programme numérique diffusé ;
- affichage de la liste des applications interactives disponibles et une étape de choix d'au moins une de ces applications, cet affichage étant effectué sur un téléviseur et/ou sur un terminal de communication mobile, en connexion avec le décodeur.

Les données multimédia du programme de télévision sont avantageusement associées à des métadonnées établies selon le standard MPEG-7.

L'invention se rapporte, selon un deuxième aspect, à un décodeur adapté à la mise en oeuvre du procédé tel que présenté ci dessus, ce décodeur comprenant des moyens de réception d'un programme de télévision numérique par câble ou par ondes électromagnétique, ce décodeur comprenant en outre :
- des moyens de connexion à une plateforme logicielle,
- des moyens d'identification d'une application interactive adaptée au programme de télévision diffusé,
- des moyens de synchronisation de cette application interactive audit programme numérique,
- des moyens de diffusion d'un signal comprenant le programme numérique et les données propres à l'application interactive identifiée.

D'autres objets et avantages de l'invention apparaîtront au cours de la description suivante de modes de réalisations, description qui va être effectuée en se référant aux dessins annexés dans lesquels :
- la figure 1 est une vue schématique d'un mode de mise en oeuvre ;
- la figure 2 est une vue schématique d'un autre mode de mise en oeuvre.

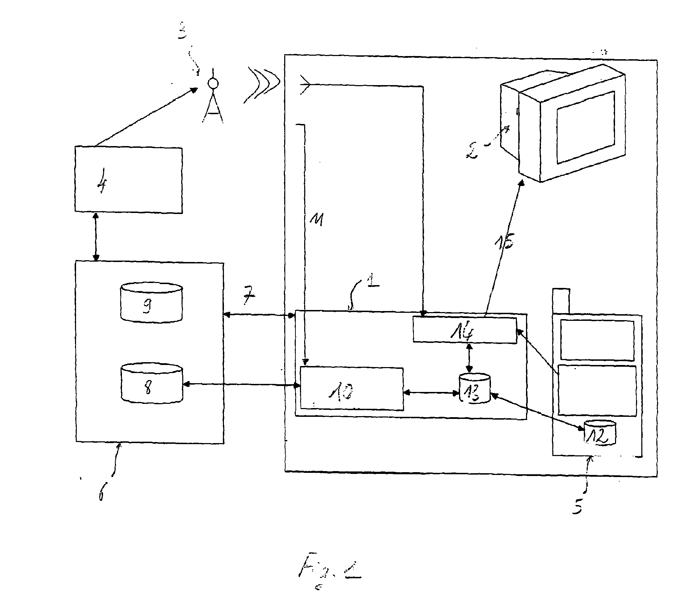

On se reporte tout d'abord à la figure 1.

Sur cette figure 1, la référence 1 désigne un décodeur numérique dédié à la télévision (*set top box*). Par « décodeur numérique dédié à la télévision » on désigne ici aussi tout adaptateur transformant un signal externe de télévision transmis par câble ou par ondes radioélectriques en un contenu affichable sur l'écran d'un téléviseur 2. Le décodeur 1 est par exemple associé à une diffusion de télévision par câble, ou bien par satellite, ou bien encore TNT (*télévision numérique terrestre*).

La référence 3 désigne l'émetteur du signal de télévision, émission assurée directement ou non par le diffuseur 4. La référence 5 désigne un terminal de communication mobile, et la référence 6 un fournisseur de services.

Le décodeur 1 est pourvu de moyens de connexion Internet au fournisseur de services 6. Par exemple, cette connexion 7 est assurée par ADSL (Asynchrone Digital Subscriber Line) ou bien encore par fibre optique. Le fournisseur de services 6 dispose d'au moins une base de données 8 d'applications interactives et au moins une base de données 9.

Le décodeur est pourvu de moyens de synchronisation 10 du programme de télévision avec le fournisseur de service ad hoc. Ces moyens de synchronisation 10 assurent également le téléchargement des applications interactives choisies par l'utilisateur.

Des balises 11 sont adressées au décodeur 1, ces balises étant associées au signal de télévision. Par exemple, les balises (*tags*) sont des marqueurs XML placés dans les multimédia diffusés. Dans une réalisation, les vidéos sont diffusées en utilisant un modèle de description MPEG-7 (Multimedia Content Description Interface), permettant l'indexation et la recherche dans les documents multimédia diffusés.

Les marqueurs ajoutés au contenu multimédia diffusé permettent aux moyens de synchronisation d'identifier les services interactifs qui sont disponibles pour le multimédia diffusé et de localiser le fournisseur de ces services.

Les services disponibles identifiés sont affichés sur l'écran du téléviseur et/ou sur l'écran du terminal de communication mobile 5. L'utilisateur du système choisit alors au moins un service interactif proposé, notamment en fonction du coût d'utilisation de ce service.

Ce choix, sur le terminal de communication mobile, est permis par une application embarquée 12.

Lorsque ce choix est fait, une application d'une mémoire cache 13, interne au décodeur 1, commande aux moyens de synchronisation 10 de télécharger les applications interactives.

Lorsque ces applications sont téléchargées, des moyens 14 assurent leur lancement et l'interactivité locale, le signal 15 provenant du décodeur 1 et allant au téléviseur 2 contenant les données numériques provenant de l'émetteur 3 et les données numériques propres au service(s) interactif(s) choisi(s) par l'utilisateur.

Le décodeur 1 indique au terminal de communication 5 qu'une nouvelle application interactive est disponible. Le cas échéant, le terminal de communication met fin à la dernière application interactive utilisée et lance la nouvelle.

Dans un autre mode de réalisation, le décodeur 1 reçoit l'application interactive par broadcast, cette application étant distribuée entre le terminal mobile et le décodeur 1.

Ainsi, l'application interactive peut être distribuée entre le décodeur 1 et/ou le terminal mobile et un serveur, ou bien entre le décodeur 1 et le terminal mobile, cette application étant synchronisée avec le contenu du programme de télévision diffusé.

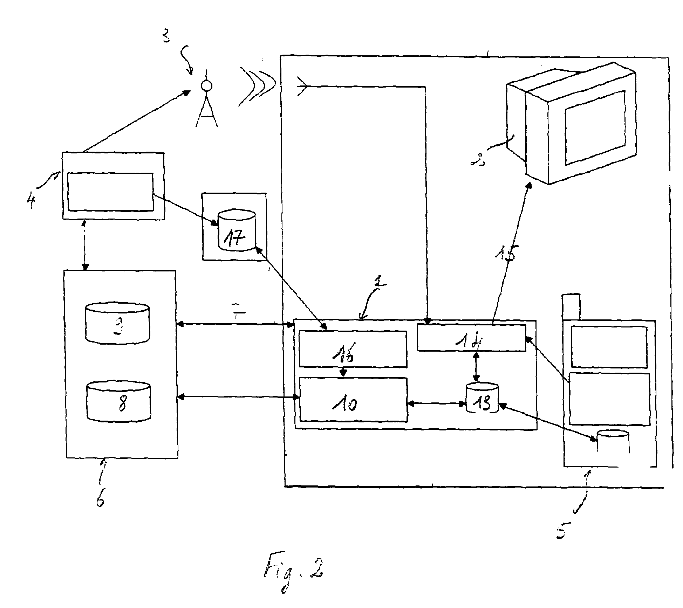

On se reporte maintenant à la figure 2.

Sur cette figure 2, les éléments analogues à ceux décrits en référence à la figure 1 portent les mêmes références numériques et ne sont pas décrits à nouveau.

Dans cette variante de réalisation, le décodeur comprend des moyens d'interrogation d'une base de données 17 du fournisseur de services, requérant la liste des applications interactives disponibles pour le programme de télévision diffusé.

Dans les modes de réalisation représentés en figure 1 ou 2, les données transmises au téléviseur par le décodeur 1 sont issues d'une double synchronisation :
- une première synchronisation entre le programme de télévision (transmis par ondes ou par câble) et l'application interactive à laquelle le décodeur accède via un réseau tel qu'Internet ;
- une deuxième synchronisation entre les données provenant du terminal de communication mobile 5 et le programme de télévision.

La synchronisation entre les données provenant du terminal et le programme numérique de télévision diffusé est effectuée grâce à une application cache.

Lorsque, par exemple, un utilisateur final répond à une question d'un quizz ou envoie un message par son terminal mobile, l'application cache est mise à jour.

Dès que l'application cache est mise à jour ou change d'état, un module prend en compte ce changement et affiche les données au téléviseur.

La synchronisation entre le programme numérique de télévision et l'application interactive est effectuée en mode mixte push/pull. Par exemple, en mode pull, le terminal mobile pull régulièrement l'application cache.

Dans certaines mises en oeuvre, une partie des moyens de mise en oeuvre de l'application interactive sont intégrées au terminal de communication mobile.

Avantageusement, la synchronisation tient compte du profil de l'utilisateur du terminal de communication mobile. L'application interactive peut ainsi être adaptée au profil de chacun. Le cas échéant, une partie du profil des utilisateurs est transmis au décodeur 1 par une ou plusieurs plateformes.

Il est ainsi possible d'afficher au téléviseur des publicité ciblées, ou des interfaces graphiques utilisateurs dépendant du type d'utilisateur (utilisateur expérimenté ou utilisateur de base), ou bien encore des recommandations (pour navigation Internet, ou recommandations de produits et services, commerce mobile).

Cette personnalisation de l'application interactive s'effectue sans que le profil des utilisateurs doive être conservé en mémoire dans le décodeur. La protection des données individuelles est ainsi assurée.

La mise en oeuvre de l'invention offre de nombreux avantages.

Il n'est pas nécessaire de modifier totalement l'architecture des moyens existants.

Le diffuseur de média (par exemple films) peut choisir le(s) fournisseur(s) de services interactifs pour tel ou tel programme.

Le service interactif n'est pas nécessairement payant pour l'utilisateur final.

Le diffuseur peut contractualiser ses relations avec le fournisseur de services ou bien encore être lui-même diffuseur de services. Le fournisseur de services pourra ou non disposer de l'exclusivité.

Les applications interactives permettent une interactivité locale ou globale.

Par exemple, une interactivité locale pourra être la suivante : pour un quizz diffusé, le service interactif pourra permettre à plusieurs personnes de jouer localement, chacune de ces personnes disposant d'un terminal de communication 5 connecté au décodeur 1. Les réponses de chacune des personnes et le palmarès pourront être affichées localement à l'écran du téléviseur 2. Les personnes ont ainsi le sentiment de participer au jeu. L'interactivité locale peut être réalisée entre les membres d'une même communauté virtuelle.

Une interactivité globale pourra être la suivante : au cours de la diffusion de clips vidéos, un quizz peut être diffusé, l'utilisateur pouvant voter pour chaque clip diffusé et voter pour le prochain clip qu'il souhaite voir diffusé.

## Revendications

1. Procédé de diffusion de télévision interactive, ce procédé comprenant d'une part la diffusion d'un programme numérique par ondes ou par câble, la réception de ce média étant assurée par un décodeur, ce procédé comprenant d'autre part la connexion à au moins un réseau informatique, notamment Internet, d'une plateforme logicielle contenant au moins une application interactive adaptée audit média numérique, le procédé comprenant une étape de connexion du décodeur avec le réseau informatique, **caractérisé en ce qu'**il comprend une étape d'identification, par le décodeur, d'au moins une application interactive adaptée au programme numérique diffusé, ce procédé comprenant en outre une double synchronisation :
- une première synchronisation entre le programme numérique et l'application interactive ;
- une deuxième synchronisation entre les données provenant d'au moins un terminal de communication mobile et le programme numérique.

2. Procédé de diffusion de télévision interactive selon la revendication 1, **caractérisé en ce qu'**il comprend une étape d'ajout, dans le signal numérique diffusé, de balises servant de repère temporel pour la synchronisation du programme diffusé à l'application interactive.

3. Procédé de diffusion de télévision interactive selon la revendication 2, **caractérisé en ce que** les balises sont des marqueurs XML.

4. Procédé de diffusion de télévision interactive selon la revendication 1, **caractérisé en ce qu'**il comprend une étape d'interrogation, par le décodeur, d'une base de données, une requête étant adressée à cette base de données afin d'obtenir les adresses des applications interactives associées au programme numérique diffusé.

5. Procédé de diffusion de télévision interactive selon l'une quelconque des revendications 1 à 4, **caractérisé en ce qu'**il comprend en outre l'affichage de la liste des applications interactives disponibles et une étape de choix d'au moins une de ces applications, cet affichage étant effectué sur un téléviseur et/ou sur un terminal de communication mobile, en connexion avec le décodeur.

6. Décodeur adapté à la mise en oeuvre du procédé tel que présenté dans les revendications précédentes, ce décodeur étant **caractérisé en ce qu'**il comprend des moyens de réception d'un programme de télévision numérique par câble ou par ondes électromagnétique, ce décodeur comprenant en outre :
- des moyens de connexion à une plateforme logicielle,
- des moyens d'identification d'une application interactive adaptée au programme de télévision diffusé,
- des moyens de synchronisation de cette application interactive audit programme numérique,
- des moyens de diffusion d'un signal comprenant le programme numérique et les données propres à l'application interactive identifiée.
